Europäisches Patentamt

European Patent Office

Office européen des brevets

(11) Veröffentlichungsnummer: **0 009 519**
**B1**

(19)

(12) **EUROPÄISCHE PATENTSCHRIFT**

(45) Veröffentlichungstag der Patentschrift:
12.12.84

(51) Int. Cl.³: **C 08 J 5/14,** B 24 D 3/28

(21) Anmeldenummer: 78200231.5

(22) Anmeldetag: 09.10.78

(54) Verwendung von Kunstharzbindemitteln zur Herstellung von Schleifmitteln und so hergestellte Schleifmittel.

(43) Veröffentlichungstag der Anmeldung:
16.04.80 Patentblatt 80/8

(45) Bekanntmachung des Hinweises auf die Patenterteilung:
12.12.84 Patentblatt 84/50

(84) Benannte Vertragsstaaten:
BE CH FR GB NL SE

(56) Entgegenhaltungen:
FR - A - 2 320 167
US - A - 2 385 371
US - A - 2 513 274
US - A - 2 589 286

CHEMICAL ABSTRACTS, Vol. 77, Nr. 10, 4. September
1972, Zusammenfassung Nr. 62826x, Columbus, Ohio,
USA, DOZAWA KAZUO et al.: "Adhesive compositions
ocntaining phenolformaldehyde resin", Seite 37, rechte
Spalte

Die Akte enthält technische Angaben, die nach dem
Eingang der Anmeldung eingereicht wurden und die
nicht in dieser Patentschrift enthalten sind.

(73) Patentinhaber: HOECHST AKTIENGESELLSCHAFT,
Postfach 80 03 20, D-6230 Frankfurt am Main 80 (DE)

(72) Erfinder: Hesse, Wolfgang, Dr., Pfingstbornstrasse 36,
D-6201 Breckenheim (DE)
Erfinder: Sattelmeyer, Richard, Dr., Nonnenwaldweg 20,
D-6229 Schlangenbad-Georgenborn (DE)
Erfinder: Teschner, Eckart, Am Sonnenhang 10,
D-6271 Hünstetten-Limbach (DE)

**0 009 519**

**Beschreibung**

Gegenstand der vorliegenden Erfindung ist die Verwendung von Kunstharzbindemitteln auf Basis einer wäßrigen Mischung verschiedener Phenolharze zur Herstellung von Schleifmitteln auf flexiblen Unterlagen ohne Mitverwendung von Formaldehyd-Donatoren und ohne Anwendung von Überdruck.

Es sind aus Chemical Abstracts, 77 (1972) Referat 62 826x (JP-A-71-34 789) Klebstoffe auf Basis von Mischungen aus Phenolformaldehydharz und Resorcinformaldehydharz bzw. Resorcin-Phenol-Formaldehydkondensaten bekannt, die noch Polypropylenglykol und pulverförmiges Polyvinylbutyral enthalten. Die Eignung für Schleifmittel läßt sich aus dieser Druckschrift nicht entnehmen. Das gleiche gilt für die US-PS 2 589 286, die Cokondensate von Phenol und Resorcin mit Formaldehyd beschreibt, in denen das Verhältnis von Formaldehyd zu den Phenolen (0,5 bis 0,9) : 1 beträgt. Die Produkte lassen sich durch Zugabe von Formaldehyd-Donatoren härten und sind für Laminate und Gießkörper brauchbar. Die Eignung für Schleifmittel war daraus nicht zu entnehmen.

Schleifmittel werden in vielen Bereichen der Technik, besonders bei der Oberflächenveredlung, angewandt. Meist erfolgt die Herstellung dieser Schleifmittel, indem zuerst auf die Unterlage ein flüssiges Bindemittel, das sogenannte Grundbindemittel, aufgetragen wird, welches gegebenenfalls Füllstoffzusätze enthält, und anschließend Schleifkörner aufgebracht werden. Dazu bedient man sich oft elektrostatischer Methoden, damit eine besonders aggressive Kornstellung erreicht wird. Im Anschluß an die Verankerung der Schleifkörner ist es üblich, eine oder mehrere Bindemittelschichten darüberzulegen.

Als Bindemittel werden vorwiegend wäßrige Lösungen von Phenolharzen, besonders solchen aus Phenol und Formaldehyd verwendet. Da die Bindemittel noch genügend fließfähig und bindefähig sein müssen, also noch nicht ausgehärtet sein dürfen, finden sogenannte Phenolharze-Vorkondensate Verwendung, die erst im anschließenden Trocknungsgang zu einem dreidimensional vernetzten Polykondensat aushärten. Dieses Polykondensat verleiht dem Schleifmittel die geforderten Eigenschaften und Beständigkeiten, insbesondere gegen chemische und physikalische Einflüsse bei erhöhter Temperatur.

Phenolharzlösungen auf Basis einwertiger Phenole sind die heute gebräuchlichsten Bindemittel für temperaturbeanspruchte Schleifmittel. Sie werden im technischen Maßstab hergestellt und angewendet. Phenol-Resorcin-Formaldehydharze, die schnell härtbar sind, sind in Verbindung mit Formaldehyd oder einem seiner höheren Polymeren als Klebstoffe in der DE-OS 1 570 848 beschrieben. Ihre alleinige Verwendung für die Herstellung von Schleifmitteln scheidet jedoch aus, da das ausgehärtete Produkt brüchig und von geringer Härte ist, so daß keine Schleifleistung erbracht werden kann.

Besonderen technischen, apparativen und zeitlichen Aufwand bedürfen die Härtungsprozesse bei der Herstellung der Schleifmittel. Um eine Zerstörung der in der Regel aus Cellulosematerialien bestehenden Unterlagen zu vermeiden, soll der Härtungsprozeß bei einer Maximaltemperatur von 120 und 130°C durchgeführt werden. Eine schnelle Härtung, z. B. durch Temperaturerhöhung, verbietet sich aber, weil einmal Rücksicht auf die Unterlage genommen werden muß, zum anderen aber weil dann mit einem erhöhten Auftreten von Blasenbildung gerechnet werden muß, die die Haftung des Harzes an der Unterlage beeinträchtigen. Die Härtung des beschichteten Materials nimmt daher im allgemeinen eine bis mehrere Stunden in Anspruch.

Mischungen aus Phenol-Formaldehydharzen einwertiger Phenole und Polyphenol-Formaldehydharzen sind als Imprägnier-Bindemittel für die Herstellung verstärkter Produkte aus der GB 762 462 bekannt. Hinweise für die Verwendung derartiger Mischungen zur Herstellung von Schleifmitteln werden aber nicht gegeben. Darüberhinaus weisen derartige Kombinationen bei ihrem Einsatz bei der Schleifmittelherstellung nach einigen Untersuchungen einen verminderten Schleifindex auf. Dieser Index ist ein Maß für die spezifische Abspanungsarbeit, die ein Schleifmittel unter definierten, konstanten Bedingungen zu leisten vermag, und ist der Quotient A/V aus dem Gewicht abgespanten Schleifgutes A durch den Gewichtsverlust V des Schleifmittels.

Man hat in der Praxis versucht, bei der Härtung von Bindemitteln auf Basis einwertiger Phenole eine niedrige Anfangstemperatur und eine geregelte fortschreitende Temperaturerhöhung zu verwenden, wodurch das Entstehen von Blasen verhindert werden konnte. Allerdings wird dadurch die benötigte Vernetzungszeit erhöht.

Um den lange Zeit erfordernden Trocknungsgang, der zeitlich und räumlich die betreffenden Fabrikationsstätten stark belastet, nicht über Gebühr auszudehnen, müssen die Phenolharze schnell vernetzt werden. Entwicklungen in dieser Richtung finden ihre Grenze aber darin, daß sich die Neigung der Bindemittel zu Polykondensationsreaktionen naturgemäß nicht auf die Verarbeitungstemperatur beschränkt, sondern auch bei Raumtemperatur vorhanden ist. Deshalb kann die Polykondensationsgeschwindigkeit von Bindemitteln auf Phenolharzbasis nicht weiter erhöht werden, weil sich sonst die Lagerbeständigkeit, die an die untere Grenze des technisch Brauchbaren angelangt ist, bis zur Unbrauchbarkeit verkürzt. So sind die in der Technik verwendeten Bindemittel im allgemeinen bei 20°C 2 bis 4 Wochen, bei 30°C 5 bis 10 Tage und bei 40°C 1 bis 3 Tage lagerbeständig. Durch Lagerung bei +5°C kann die Lagerbeständigkeit zwar auf 2 bis 4 Monate verlängert werden, doch bleibt diese aufwendige Maßnahme dem Hersteller und dem Verbraucher vorbehalten, während sie sich für den Transport derartiger Güter aus wirtschaftlichen Erwägungen, die durch hygienische Momente noch

2

verschärft werden, verbietet. Der Vertriebsradius dieser Bindemittel ist somit erheblich beschränkt. Der Bedarf in räumlich weiterer Entfernung, wo eigene Produktionsstätten fehlen, kann also nicht gedeckt werden.

Der Trocknungs- und Aushärtungsprozeß der bisher verwendeten phenolharzgebundenen Schleifmittel läßt sich in der Praxis aus den oben angegebenen Gründen weder durch Erhöhung der Temperatur bei der Aushärtung noch durch die Erhöhung der Reaktivität der Phenolharze beschleunigen, sondern benötigt eine lange Zeit. Um eine derartig lange Verweilzeit bewältigen zu können und gleichzeitig eine hohe Produktion zu erzielen, werden die Schleifmittelbahnen in Wärmekanälen getrocknet und gehärtet, die zwangsläufig als — mit zirkulierender Warmluft geheizte — Schleifen- oder Hängekanäle, wie Hängetrockner, Girlandentrockner, ausgebildet sind, diese weisen aber gleichwohl noch Längen bis zu 100 m für den Vortrockenhang (Zwischenhang) und bis zu mehreren 100 m für den Haupthang auf. Trotz allem ist diese Trockenpartie eines Schleifmittelwerkes nach wie vor der größte Engpaß, weil die Schleifmittelbahnen zur Entfernung der großen Mengen von Wasser zunächst bis zu mehreren Stunden bei Temperaturen bis zu 95°C vorgetrocknet und anschließend bis zu mehreren Stunden lang (1 bis 4 Stunden) bei Temperaturen von 120 bis 130°C optimal ausgehärtet und getrocknet werden.

Es mangelt daher an Bindemitteln zur Herstellung von phenolharzgebundenen Schleifmitteln,

— deren Lagerbeständigkeit auf das Mehrfache des heute üblichen verlängert ist;
— die höchstens mit bisher gebräuchlichen, möglichst aber mit kürzeren Härtezeiten auskommen;
— die entweder eine wesentlich erhöhte Geschwindigkeit bei ihrer Herstellung erlauben oder
— bei gleicher Geschwindigkeit wesentlich kleinere Trocknungsanlagen ermöglichen und
— die eventuell zusätzlich das Schleifmittel qualitativ verbessern.

Ferner sollen diese neuen Bindemittel keine — oder nur in geringem Maße — schädlichen Stoffe abspalten, um so die in den Fabrikationsstätten Beschäftigten und die Umgebung der Fabrikationsstätten vor giftigen Stoffen zu schützen.

Aus der US-PS 2 513 274 sind schnellhärtende Phenolharze auf Basis von Phenol und Ruorcin bekannt. Der in dieser Druckschrift enthaltene Grenzwert, der dem Erfindungsgegenstand am nächsten kommt, liegt im Mischungsverhältnis eines Phenolharzes B zu einem Phenol-Resorcinharz C von 70 : 30. Jedoch wird an diesem Grenzwert demonstriert, daß der Resorcinanteil zu niedrig ist, um befriedigende Produkte zu erhalten. Die Qualität und Eignung der Produkte wird in dieser Entgegenhaltung durch Vergleichsversuche über die Gelzeiten beschrieben, die unter Zusatz von 5 Gew.-% Hexamethylentetramin erhalten werden. Diese Mitverwendung von Formaldehyd-Donatoren ist aus allen Beispielen ersichtlich. Ein Hinweis, auch in Abwesenheit derartiger Donatoren zu arbeiten, ist in der Entgegenhaltung nicht zu finden. Vielmehr wird im Zusammenhang mit der Angabe über die Möglichkeit, auch Stabilisatoren wie Äthanol zu verwenden, noch die Mengenabgabe der Formaldehyd-Donatoren mit 2 bis 10% spezifiziert, da sichergestellt werden soll, daß die Gelzeit 15 Minuten bei 70°C nicht überschreiten soll.

Die Tatsache, daß die Gelzeit ohne Mitverwendung von Hexamethylentetramin bei den bekannten Produkten unbefriedigend ist, wird durch eigene Versuche der Anmelderin belegt, die in einem Versuchsbericht niedergelegt sind. Daraus ergibt sich, daß die erfindungsgemäß verwendeten Mischungen sich gegenüber solchen der Entgegenhaltung, die keine Formaldehyd-Donatoren enthalten, durch ganz erheblich verbesserte Gelzeiten auszeichnen. Auch die Schleifleistungszahlen sind erheblich verbessert, insbesondere auch gegenüber solchen Produkten, die mit Hexamethylentetramin verarbeitet worden sind. Außerdem wird durch die Mitverwendung von Hexamethylentetramin die Emission von Formaldehyd verstärkt, wie ebenfalls durch Vergleichsversuche belegt ist. Ganz allgemein jedoch sind die Werte für die Formaldehyd-Emission bei den Harzen gemäß der US-PS 2 513 274 um ein Vielfaches höher als bei denen gemäß der vorliegenden Erfindung.

In der US-PS 2 513 274 ist weiter angegeben, die dort beschriebenen Produkte eigneten sich als Bindemittel für verschiedene Arten von Füllstoffen wie Holzmehl, pulverförmigem Siliziumdioxyd, Schleifkörnern usw., wobei die entstehenden Mischungen unter Wärme und Druck zu unlöslichen unschmelzbaren Produkten verpreßt werden. Auch der Hinweis in der Druckanschrift, die dort beschriebenen Harzkombinationen könnten, besonders wenn sie ein Glykol oder Glyzerin als Weichmacher enthielten, auf eine Stütze, z. B. Glastuch, aufgetragen, Schleifkörner darin eingebettet und das Produkt schließlich gehärtet werden, legte die erfindungsgemäße Arbeitsweise nicht nahe, bei der eben Kunstharzbindemittel verwendet werden, in denen nur untergeordnete Mengen an Mischkondensat aus einwertigem Phenol und mehrwertigem Phenol mit Formaldehyd und keine Formaldehyd-Donatoren verwendet werden.

Es wurde nun überraschend gefunden, daß sich die geschilderten Nachteile durch die Erfindung, d. h. durch die Verwendung von Mischungen verschiedener Phenolharze, die einen Anteil an Mischkondensaten aus ein- und mehrwertigen Phenol-Formaldehyd-Harzen aufweisen, vermeiden lassen.

Gegenstand der Erfindung ist die Verwendung von Kunstharzbindemitteln auf Basis einer wäßrigen Mischung verschiedener Phenolharze aus I) mindestens einem Phenol-Resol, in dem mindestens 1,1 Mol Formaldehyd pro phenolisches Hydroxyl der einwertigen Phenole addiert und/oder ankonden-

3

siert ist, und II) mindestens einem Mischkondensat aus mindestens einem einwertigen Phenol mit Formaldehyd, das pro Mol einwertigem Phenol 1,1 bis 1,9 Mol Formaldehyd und 0,1 bis 2,0 Mol eines mehrwertigen Phenols enthält, wobei das molare Verhältnis der eingesetzten Mengen an Formaldehyd zur Summe der Phenole 0,6 bis 1,5 : 1 beträgt, sowie gegebenenfalls weiteren Zusätzen, wobei die Komponenten I) und II) im Mischungsverhältnis von höchstens 95 : 5 und mindestens 70 : 30 vorliegen, zur Herstellung von Schleifmitteln auf flexiblen Unterlagen ohne Mitverwendung von Formaldehyd-Donatoren und ohne Anwendung von Überdruck.

Ein weiterer Gegenstand der Erfindung sind auch die Schleifmittel selbst.

Als Komponente I) eignen sich vorzugsweise solche Phenolharze, die durch Addition und/oder Kondensation von Formaldehyd an einwertige Phenole in Gegenwart von Alkalien oder Erdalkalien als Katalysator hergestellt werden. Die Katalysatoren können im Harz verbleiben oder teilweise oder vollständig entfernt bzw. neutralisiert werden. Es ist auch möglich, einen Teil des Formaldehydes in nicht-reaktiver Form, z. B. in Gestalt von Methylenbrücken, in das Harz einzubauen. Zu diesem Zweck können bei erhöhten Temperaturen die gleichen Katalysatoren wie oben angegeben oder Säuren verwendet werden. Als Komponente II), die eine hohe potentielle Kondensationsgeschwindigkeit mit Formaldehyd aufweist, werden Mischkondensate aus einwertigen Phenolen, Formaldehyd und mehrwertigen Phenolen, z. B. Resorcin, Brenzkatechin oder Pyrogallol eingesetzt. Bei der Herstellung der Mischkondensate ist darauf zu achten, daß die bekannt schnelle Reaktionsfähigkeit des mehrwertigen Phenols, z. B. des Resorcins, im wesentlichen erhalten bleibt.

Aus der Gruppe der einwertigen Phenole, die bei der Herstellung der Komponenten I) und II) eingesetzt werden können, wird m-Kresol, 3,5-Xylenol und vorzugsweise Phenol, $C_6H_5OH$ genannt. Es können aber auch Alkylphenole mit 1 bis 9 C-Atomen im Alkylrest in Mischung mit Phenol verwendet werden. Der Anteil an Phenol beträgt dann mindestens 50 Mol%.

Die Herstellung der Harzkomponente I) erfolgt in üblicher Weise, z. B. wird einwertiges Phenol mit polymerem Formaldehyd und/oder wäßrigen Lösungen von Formaldehyd im allgemeinen bei Temperaturen zwischen 30 und 100°C, vorzugsweise zwischen 30 und 80°C, in Gegenwart von Alkalien oder Erdalkalien als Katalysator umgesetzt, bis der erforderliche Kondensationsgrad erreicht ist. Der Kondensationsgrad wird durch Bestimmung der Viskosität charakterisiert und liegt im allgemeinen bei 200 bis 2000, vorzugsweise 300 bis 1000 mPa · s/20°C. Das Molverhältnis von einwertigem Phenol : Formaldehyd soll im allgemeinen mindestens 1 : 1,1 betragen, vorzugsweise 1 : 1,3 bis 1 : 2,2. Als Katalysatoren dienen anorganische Verbindungen, vorzugsweise Natronlauge, Kalilauge, Magnesiumoxyd, Calciumhydroxyd oder Bariumhydroxyd. Sie werden im allgemeinen in Mengen von 0,01 bis 0,9 Äquivalent, vorzugsweise von 0,05 bis 0,7 Äquivalent, bezogen auf phenolisches Hydroxyl, verwendet. Der Harzgehalt der wäßrigen Lösungen liegt im allgemeinen zwischen 50 und 90%, vorzugsweise zwischen 60 und 80%. Er kann entweder durch Destillation eingestellt oder durch Auswahl der Konzentration der Reaktionspartner von vornherein festgelegt werden. Die bei der Herstellung erhaltenen Phenolharzlösungen können als solche eingesetzt werden. Zur Verbesserung der Lagerbeständigkeit ist es oft zweckmäßig, den verwendeten Katalysator zu neutralisieren. Zur Verbesserung der Löslichkeiten in Wasser und zur weiteren Verbesserung der Lagerbeständigkeit können auch wasserlösliche Alkohole wie Methanol, Äthanol, Propanol usw., mehrwertige Alkohole wie Glykole oder Glycerin in Mengen zwischen 1 und 20, vorzugsweise zwischen 2 und 10 Gew.-%, bezogen auf die Gesamtmenge des Bindemittels, verwendet werden.

Die Komponente II) besteht aus Mischkondensaten aus einwertigem Phenol, Formaldehyd und mehrwertigen Phenolen, vorzugsweise zweiwertigen, z. B. Resorcin. Diese können hergestellt werden, indem man zunächst ein Phenolresol herstellt und dieses anschließend z. B. mit Resorcin umsetzt. Dazu wird 1 Mol einwertiges Phenol im allgemeinen in Gegenwart von 0,1 bis 0,9, vorzugsweise 0,2 bis 0,6 Mol Alkali oder Erdalkali, vorzugsweise Natronlauge, im allgemeinen mit 1,1 bis 1,9, vorzugsweise 1,3 bis 1,8 Mol Formaldehyd bei Temperaturen zwischen 30 und 100°C, vorzugsweise 40 bis 80°C umgesetzt bis der Formaldehyd verbraucht ist. Dann werden dieser Reaktionsmischung im allgemeinen 0,1 bis 2,0, vorzugsweise 0,2 bis 1,5 Mol mehrwertiges Phenol zugefügt und unter gleichen Bedingungen umgesetzt, bis ein durch Viskositätsmessungen charakterisierter Kondensationsgrad erreicht ist. Das ist der Fall, wenn die Viskosität im allgemeinen von 100 bis 2000, vorzugsweise 200 bis 1000 m/Pa · s/20°C beträgt. Das molare Verhältnis der eingesetzten Mengen an Formaldehyd zur Summe aus Phenol und mehrwertigen Phenolen darf höchstens 1,5 : 1 betragen und liegt vorzugsweise zwischen 0,7 und 1,3 : 1. Es ist aber nicht zweckmäßig, weniger Formaldehyd als 0,6 Mol zu verwenden. Diese Harze können ebenso wie die vorher beschriebene Komponente I) mit den oben aufgeführten Alkoholen in den genannten Mengen gemischt werden.

Die so hergestellten Harzkomponenten sind im allgemeinen für sich gut lagerbeständig.

Auch Gemische verschiedener Phenolresole I) und Mischkondensate II) untereinander können als Mischungskomponenten eingesetzt werden.

Als Unterlagen für die Herstellung von Schleifmitteln kommen im allgemeinen flexible Materialien, wie Papier, Gewebe, Vulkanfiber, Vliesstoff, Folien oder ähnliche in Frage.

Die Komponenten I) und II) werden im allgemeinen im Mischungsverhältnis von 95 : 5 bis 70 : 30, vorzugsweise 90 : 10 bis 70 : 30 zu einer Bindemittelflotte vermischt, die gegebenenfalls übliche Füllstoffe wie Calciumcarbonat, Gips, Kaolin, Kryolith usw. in bekannter Menge enthält. Diese Zusätze

4

werden meist nicht dem Grundbindemittel, sondern dem Deckbindemittel zugegeben.

Die Verarbeitung zu Schleifmitteln erfolgt, indem auf die Unterlage in üblicher Weise Bindemittel und Schleifkorn aufgebracht werden. Die Verarbeitungsdauer liegt im allgemeinen zwischen 2 bis 48 Stunden, kann aber auch länger sein. Als Schleifkorn eignen sich alle üblicherweise verwendeten Materialien wie Sand, Schmirgel, Siliciumcarbid, gekörntes Aluminiumoxyd und andere. Das Bindemittel zeichnet sich dadurch aus, daß es nur noch geringe Mengen an freiem Formaldehyd enthält und daß auch beim Erhitzen auf höhere Temperaturen, selbst solchen, die über der Verarbeitungstemperatur liegen, Phenol und besonders Formaldehyd in wesentlich verringerten Mengen an die Umwelt abgegeben werden. Ebenso wird die Emission dieser Stoffe auch bei der Anwendung der Schleifmittel, d. h. beim Schleifen, erheblich vermindert. Als wesentlicher Vorteil gegenüber den bisher bekannten Bindemitteln ist die verkürzte Vernetzungszeit der erfindungsgemäß eingesetzten Bindemittel anzusehen.

In der Tabelle, in der die Ergebnisse der verarbeitungs- und schleiftechnischen Prüfung zusammengefaßt sind, stellen die Versuche 1 bis 4 die erfindungsgemäß verwendeten Bindemittelmischungen dar, während der Versuch 5 eine Vergleichsmischung ist. In den Versuchen 6 bis 8 werden die 100%igen Phenolharzkomponenten der erfindungsgemäß verwendeten Mischung als Vergleich angeführt.

Charakteristisch für die Härtungsgeschwindigkeit eines Harzes ist die sogenannte B-Zeit. Dies ist die Zeit, die das Harz unter Wärmeeinwirkung benötigt, um aus dem flüssigen Zustand in den gummielastischen (B-Zustand) überzugehen.

Aus der Tabelle geht hervor, daß die B-Zeit der erfindungsgemäß verwendeten Mischungen in vorliegendem Falle bei 120° C 7 bis 11 Minuten gegenüber derjenigen bei konventionellen Bindemitteln von 10 bis 30 Minuten beträgt. Die Härtung wird also stark beschleunigt; die Verarbeitungszeiten sinken von bisher 2 Stunden in der Vortrockenstufe bis auf 40 bis 50 Minuten, in der zweiten Vernetzungsstufe können sie bei 130° C nur noch 20 bis 30 Minuten statt bisher 1,5 bis 4 Stunden betragen. Bei der Verarbeitung macht sich sowohl bei Normal- als auch bei erhöhten Temperaturen kein störender Formaldehydgeruch bemerkbar. Eine Verringerung der Emission von Formaldehyd und Phenol ist mit steigendem Anteil der Komponente II) zu beobachten. Durch das neue Verfahren wird aber vor allem die Qualität der Schleifmittel erhöht. Der Schleifindex verbessert sich bei der erfindungsgemäßen Anwendung der Bindemittel mit steigendem Gehalt an resorcinhaltiger Harzkomponente bis zu ca. 25% über ein Maximum.

In den nachstehenden Beispielen bedeutet T Gewichtsteile und % Gewichtsprozent.

## Beispiele

### Herstellung der Resolkomponente I)

#### 1.) Phenolharz A

In einem mit Rührer und Thermometer ausgestatteten Reaktionsgefäß werden 940 T Phenol $C_6H_5OH$ geschmolzen und mit 186 T 37%iger wäßriger Formaldehydlösung vermischt. Bei 50° C werden dann 38 T 33%ige Natronlauge zugegeben, wobei die Temperatur auf 60° C steigt. Anschließend werden nach Maßgabe der exothermen Reaktion 420 T Paraformaldehyd (91%ig) in Portionen zugegeben und der Ansatz so lange gerührt, bis das Harz eine Viskosität von 600 mPa · s/20° C aufweist. Nach Zugabe von 80 T Methanol wird abgekühlt und mit verdünnter Schwefelsäure ein pH-Wert von 4,8 bis 5,3 eingestellt. Die Ausbeute an fertigem Harz ist quantitativ, Rückstand: 68% (die Rückstandsbestimmung erfolgt, indem eine Probe von 2 g eine Stunde auf 135° C erhitzt wird), Viskosität: 350 mPa · s/20° C, die sich nach 6 Wochen Lagerung bei Raumtemperatur auf 407 mPa · s/20° C erhöht.

#### 2.) Phenolharz B

Beispiel 1 wird wiederholt, wobei jedoch die Zugabe von Methanol und Schwefelsäure unterbleibt. Das Harz hat eine Viskosität von 650 mPa · s/20° C und einen Rückstand (2 g, 1 Std. 135° C) von 72%.

### Herstellung der Reaktivatorkomponente II)

#### 3.) Phenolharz C

940 T Phenol und 200 T einer 37%igen wäßrigen Formaldehydlösung werden unter Rühren auf 40° C erhitzt und 600 T einer 33%igen Natronlauge zugegeben. Die Temperatur darf dabei 60° C nicht überschreiten. Anschließend trägt man nach Maßgabe der exothermen Reaktion bei 60° C weitere 610 T einer wäßrigen 37%igen Formaldehydlösung sowie 198 T Paraformaldehyd (91%ig) ein und hält den Ansatz bei dieser Temperatur, bis kein freier Formaldehyd mehr vorhanden ist. Dann trägt man 440 T Resorcin ein, rührt den Ansatz bei 60°C, bis eine Viskosität von 300 mPa · s/20°C erreicht ist und kühlt ab. Harzrückstand: 62%, Ausbeute: quantitativ. Die Viskosität erhöhte sich nach 6 Wochen Lagerung bei Raumtemperatur nur auf 333 mPa · s/20°C.

### 4.) Kondensationsprodukt einer Mischung eines Resorcinnovolaks mit einem Phenolresol

### Phenolharz D 1

440 T Resorcin und 50 T Wasser werden geschmolzen und mit 2 T 12,5%iger Schwefelsäure versetzt. Zu der auf 115°C erhitzten Schmelze werden 211 T einer wäßrigen, 37%igen Formaldehydlösung zugetropft und bei dieser Temperatur belassen, bis der Formaldehydgehalt 0% beträgt.

### Phenolharz D 2

940 T Phenol werden geschmolzen und mit 720 T Natronlauge (33%ig) versetzt und auf 60°C erwärmt. Bei dieser Temperatur werden 614 T einer 37%igen Formaldehydlösung sowie 250 T Paraformaldehyd (91%ig) nach Maßgabe der exothermen Reaktion zugegeben und der Ansatz bei dieser Temperatur belassen, bis der Formaldehydgehalt 0% beträgt. Zu diesem Ansatz wird die abgekühlte Gesamtmenge des unter D 1) beschriebenen Harzes gegeben und auf 70°C erwärmt bis die Viskosität 145 mPa · s/20°C beträgt. Rückstand: 57,5%, Ausbeute: quantitativ.

### 6.) Vergleich 1

Für die in der Tabelle aufgeführte Prüfung wird eine Bindemittelmischung aus 95% Phenolharz A und 5% Resorcin herangezogen (siehe Tabelle, Versuch 6).

### Herstellung der Schleifmittel

Eine speziell für die Schleifmittelindustrie gefertigte Vulkanfiber von 0,8 mm Stärke und einem Flächengewicht von ca. 1000 g/m² wird mit dem Grundbindemittel in einer Naßfilmstärke von 150 µm beschichtet und mit Normalkorund (Elektrokorund) der Körnung 16 in einer Menge von 1600 g/m² bestreut. Als Grundbindemittel werden die in der Tabelle angeführten Versuchsmischungen in der vorliegenden Form verwendet. Danach werden die Proben in der Tabelle wie angegeben vorgetrocknet. Nun wird das Deckbindemittel in einer Maßauftragsmenge von 600 g/m² aufgetragen. Als Deckbindemittel wird die jeweilige Phenolharzmischung, gemischt mit der gleichen Gewichtsmenge Kalksteinmehl (mittlere Korngröße 10 µm), verwendet. Die Schichten werden dann — wie ebenfalls in der Tabelle angegeben — bei 130°C ausgehärtet und die Proben anschließend 24 Stunden bei 25°C und ca. 90% relativer Luftfeuchtigkeit reklimatisiert. Aus dem beschichteten Vulkanfiber werden Ronden mit einem Außendurchmesser von 178 mm und einem Innendurchmesser von 22 mm ausgestanzt und die Bindemittelschicht in üblicher Weise gebrochen.

### Schleiftest

Die Scheiben werden einem Schleiftest unterzogen, der auf dem Prinzip des »Kantenschliffes« beruht. Dabei werden sie mit einem Anstellwinkel ihrer Rotationsebene von 25° mit einer Andruckkraft von 80 N auf die Kante eines 3 mm dicken Cr—Ni-Stahlbleches gedrückt. Die Tourenzahl beträgt 3200 U/min., die Schleifdauer 9 Minuten. Gemessen wird der Gewichtsverlust V der Schleifscheiben und das Gewicht A des abgespanten Stahles und daraus der Schleifindex bestimmt.

Tabelle

| Versuch Nr. | Bindemittel Komponente I) Phenolharz | Anteil % | Komponente II) Phenolharz | Anteil % | B-Zeit 120°C min | Lagerstabilität d. Phenolharze Zeit f. 50%igen Viskositäts-Anstieg bei 20°C Wochen | Härtezeit Vortrocknung bei 90°C min | Härtung bei 130°C min | Gesamt min | Emission aus 50 μm-Film 1 h, 100°C Formaldehyd % | Phenol % | Schleifindex A/V |
|---|---|---|---|---|---|---|---|---|---|---|---|---|
| 1 | A | 90 | C | 10 | 8 | — | 50 | 30 | 80 | 0,2 | 5,0 | 8,3 |
| 2 | A | 80 | C | 20 | 6 | — | 40 | 20 | 60 | 0,1 | 2,9 | 9,0 |
| 3 | B | 80 | C | 20 | 7 | — | 70 | 30 | 100 | 0,2 | 4,1 | 8,8 |
| 4 | A | 80 | D | 20 | 11 | E : 12 | 90 | 60 | 150 | 0,3 | 4,2 | 7,0 |
| 5 (Vergl. 1) | A | 95 | Resorcin | 5 | 25 | — | 150 | 180 | 330 | 0,4 | 8,6 | 5,8 |
| 6 (Vergl. 2) | A | 100 | — | — | 22 | 28 | 140 | 120 | 260 | 0,9 | 6,2 | 7,7 |
| 7 (Vergl. 3) | — | — | C | 100 | 30 | 30 | 200 | 240 | 440 | 0,0 | 4,7 | 0,8 |
| 8 (Vergl. 4) | B | 100 | — | — | 10 | 3 | 120 | 90 | 210 | 1,0 | 7,0 | 7,5 |

0 009 519

**Patentansprüche**

1. Verwendung von Kunstharzbindemitteln auf Basis einer wäßrigen Mischung verschiedener Phenolharze aus I) mindestens einem Phenol-Resol, in dem mindestens 1,1 Mol Formaldehyd pro phenolisches Hydroxyl der einwertigen Phenole addiert und/oder ankondensiert ist, und II) mindestens einem Mischkondensat aus mindestens einem einwertigen Phenol und mindestens einem mehrwertigen Phenol mit Formaldehyd, das pro Mol einwertigem Phenol 1,1 bis 1,9 Mol Formaldehyd und 0,1 bis 2,0 Mol eines mehrwertigen Phenols enthält, wobei das molare Verhältnis der eingesetzten Mengen an Formaldehyd zur Summe der Phenole 0,6 bis 1,5 : 1 beträgt, sowie gegebenenfalls weiteren Zusätzen, wobei die Komponenten I) und II) im Mischungsverhältnis von höchstens 95 : 5 und mindestens 70 : 30 vorliegen, zur Herstellung von Schleifmitteln auf flexiblen Unterlagen ohne Mitverwendung von Formaldehyd-Donatoren und ohne Anwendung von Überdruck.

2. Ausführungsform nach Anspruch 1, dadurch gekennzeichnet, daß das Resol I) aus Formaldehyd und Phenol im Molverhältnis von 1,3 : 1 bis 2,2 : 1 aufgebaut ist.

3. Ausführungsform nach Anspruch 1 oder 2, dadurch gekennzeichnet, daß als Komponente I) ein Reaktionsprodukt mit einem Kondensationsgrad, der einer Viskosität von 200 bis 2000, vorzugsweise 300 bis 1000 mPa · S/20°C entspricht und als Komponente II) ein solches mit einer Viskosität von 100 bis 2000, vorzugsweise 200 bis 1000 mPa · s/20°C eingesetzt wird.

4. Ausführungsform nach einem oder mehreren der Ansprüche 1 bis 3, dadurch gekennzeichnet, daß das Mischkondensat II) pro Mol einwertigem Phenol 1,3 bis 1,8 Mol ankondensierten Formaldehyd und 0,2 bis 1,5 Mol eines mehrwertigen Phenols enthält und das molare Verhältnis der eingesetzten Mengen an Formaldehyd zur Summe der Phenole 0,7 bis 1,3 : 1 beträgt.

5. Ausführungsform nach einem oder mehreren der Ansprüche 1 bis 4, dadurch gekennzeichnet, daß das mehrwertige Phenol in der Komponente II) Resorcin ist.

6. Ausführungsform nach einem oder mehreren der Ansprüche 1 bis 5, dadurch gekennzeichnet, daß die Komponenten I) und II) im Mischungsverhältnnis 90 : 10 bis 70 : 30 vorliegen.

7. Ausführungsform nach einem oder mehreren der Ansprüche 1 bis 6, dadurch gekennzeichnet, daß die Komponenten I) und II) mit wasserlöslichen ein- oder mehrwertigen Alkoholen in Mengen von 1 bis 20 Gew.-%, bezogen auf die Gesamtmenge an Bindemittel, versetzt sind.

8. Ausführungsform nach einem oder mehreren der Ansprüche 1 bis 7, dadurch gekennzeichnet, daß mindestens zwei Bindemittelschichten aufgebracht werden, die gegebenenfalls weitere übliche Zusätze enthalten, wobei jede der Bindemittelschichten nacheinander auf eine flächenförmige, flexible Unterlage aufgebracht, jeweils getrocknet und abgekühlt wird, nach dem ersten Auftrag eine Schleifkornschicht aufgestreut wird und die auf der Unterlage befindlichen Schichten anschließend gehärtet werden.

9. Schleifmittel, hergestellt nach einer Ausführungsform gemäß einem oder mehreren der Ansprüche 1 bis 8.

**Claims**

1. Use of synthetic resin binders based on an aqueous mixture of different phenolic resins being I) at least one phenol-resol in which at least 1.1 mole of formaldehyde per phenolic hydroxyl of the monohydric phenols has been added and/or condensed to the phenolic body and II) at least one co-condensate of at least one monohydric phenol and at least one polyhydric phenol with formaldehyde, which co-condensate contains per mole of monohydric phenol from 1.1 to 1.9 mole of formaldehyde and from 0.1 to 0.2 mole of a polyhydric phenol, the molar ratio of the used quantities of formaldehyde to the sum of the phenols being in the range of from 0.6 : 1 to 1.5 : 1, and optionally further additives, components I) and II) being present in the mixture in a ratio of at most 95 : 5 and at least 70 : 30, for the manufacture of abrasive materials on flexible substrates, but without the use of formaldehyde donors and without application of superatmospheric pressure.

2. Embodiment according to claim 1, characterized in that the resol I) has been derived from formaldehyde and phenol, $C_6H_5OH$, in a molar ratio of from 1.3 : 1 to 2.2 : 1.

3. Embodiment according to claim 1 or 2, characterized in that as component I) a reaction product is used having a degree of condensation corresponding to a viscosity of from 200 to 2000, preferably, of from 300 to 1000 mPas/20°C and as component II) a reaction product having a viscosity of from 100 to 2000, preferably of from 200 to 1000 mPas/20°C.

4. Embodiment according to one or more of claims 1 to 3, characterized in that the co-condensate II) contains per mole of monohydric phenol from 1.3 to 1.8 mole of formaldehyde condensed thereto and of from 0.2 to 1.5 mole of a polyhydric phenol and in that the molar ratio of the amounts of formaldehyde used to the sum of the phenols is in the range of from 0.7 to 1.3 : 1.

5. Embodiment according to one or more of claims 1 to 4, characterized in that the polyhydric phenol in component II) is resorcinol.

6. Embodiment according to one or more of claims 1 to 5, characterized in that the components I) and II) are present in the mixture in a ratio of form 90 : 10 to 70 : 30.

7. Embodiment according to one of more of claims 1 to 6, characterized in that water-soluble mono- or polyhydric alcohols in amounts of from 1 to 20% by weight have been added to the components I) and II), the percentage being referred to the total amount of binder.

8. Embodiment according to one or more of claims 1 to 7, characterized in that at least two layers of binder are applied which if desired contain further conventional additives, each layer of binder being successively applied to a surface-like flexible substrate, each being dried and cooled, and that after the first application a layer of abrasive grains is distributed thereon and in that the layers applied to the support are subsequently hardened.

9. Abrasive material whenever produced according to an ambodiment according to one or more of claims 1 to 8.


## Revendications

1. Utilisation de liants aux résines synthétiques à base d'un mélange aqueux de différentes résines phénoliques, constitué I) d'au moins un résol phénolique, dans lequel on ajoute et/ou condense au moins 1,1 mole de formaldéhyde par hydroxyle phénolique des monophénols, et II) d'au moins un co-condensat constitué d'au moins un monophénol et d'au moins un polyphénol avec le formaldéhyde, lequel contient par mole de monophénol 1,1 à 1,9 mole de formaldéhyde et 0,1 à 2,0 mole d'un polyphénol, le rapport molaire entre les quantités utilisées de formaldéhyde et la somme des phénols étant de 0,6 à 1,5 : 1, et éventuellement aussi d'autres additifs, les composants I) et II) faisant un rapport de mélange au plus égal à 95 : 5 et au moins égal à 70 : 30, pour la préparation d'abrasifs sur des supports flexibles sans utilisation simultanée de donneurs de formaldéhyde et sans utilisation d'une surpression.

2. Forme de réalisation selon la revendication 1, caractérisée en ce que le résol I) est constitué de formaldéhyde et de phénol selon un rapport molaire compris entre 1,3 : 1 et 2,2 : 1.

3. Forme de réalisation selon l'une quelconque des revendications 1 ou 2, caractérisée en ce qu'on utilise en tant que composant I) un produit de réaction présentant un degré de condensation correspondant à une viscosité de 200 à 2000, de préférence 300 à 1000 mPa · s/20° C et, en tant que composé II), un tel composant ayant une viscosité de 100 à 2000, de préférence 200 à 1000 mPa · s/20° C.

4. Forme de réalisation selon l'une quelconque des revendications 1 à 3, caractérisée en se que le co-condensat II) contient par mole de monophénol 1,3 à 1,8 mole de formaldéhyde condensé et 0,2 à 1,5 mole d'un polyphénol, le rapport molaire entre les quantités utilisées de formaldéhyde et la somme des phénols étant de 0,7 à 1,3 : 1.

5. Forme de réalisation selon l'une quelconque des revendications 1 à 4, caractérisée en ce que le polyphénol du composant II) est le résorcinol.

6. Forme de réalisation selon l'une quelconque des revendications 1 à 5, caractérisée en ce que les composant I) et II) sont présents selon un rapport de mélange compris entre 90 : 10 et 70 : 30. ·

7. Forme de réalisation selon l'une quelconque des revendications 1 à 6, caractérisée en ce que les composants I) et II) sont additionnés de mono- ou polyalcools solubles dans l'eau en des quantités de 1 à 20% en poids sur la base de la quantité totale de liant.

8. Forme de réalisation selon l'une quelconque des revendications 1 à 7, caractérisée en ce qu'on applique au moins deux couches de liant, qui contiennent éventuellement d'autres additifs habituels, ce à l'occasion de quoi chacune des couches de liant est appliquée après l'autre sur un support bidimensionnel et flexible, chacune est séchée et refroidie, une couche de grains abrasifs étant répandue après la première application, les couches se trouvant sur le support étant ensuite durcies.

9. Abrasif, préparé selon une forme de réalisation selon l'une quelconque des revendications 1 à 8.